# EUROPÄISCHE PATENTANMELDUNG

(11) **EP 2 573 038 A1**
(43) Veröffentlichungstag der Anmeldung: **27.03.2013**
(21) Anmeldenummer: 11182750.7
(22) Anmeldetag: 26.09.2011
(51) Int. Cl.: B66C 13/46, B65G 63/00

(54) **Leitsystem zum automatischen Leiten eines von einem Kran zu Be- und/oder entladenden Lastkraftwagens**

(71) Anmelder: Siemens Aktiengesellschaft, 80333 München (DE)
(72) Erfinder: Fiegert, Michael, 81739 München (DE); Dippl, Sebastian, 80469 München (DE)

(57) **Zusammenfassung**

Die Erfindung betrifft ein Leitsystem zum automatischen Leiten eines von einem Kran (10) zu be- und/oder entladenden Lastkraftwagens in eine vorbestimmte Halteposition relativ zu dem Kran (10), wobei das Leitsystem eine Spurerkennungseinheit (21) aufweist, die derart ausgelegt ist, dass sie diejenige Spur (16a-f), auf welcher der Kran (10) den Lastkraftwagen be- und/oder entladen soll oder aktuell be- und/oder entlädt, automatisch erfasst und ein die erfasste Spur (16a-f) repräsentierendes Spursignal ausgibt.

## Beschreibung

Die vorliegende Erfindung betrifft ein Leitsystem zum automatischen Leiten eines von einem Kran zu be- und/oder entladenden Lastkraftwagens in eine vorbestimmte Halteposition relativ zu dem Kran, umfassend wenigstens einen Positionserfassungssensor, der derart ausgelegt ist, dass er wahlweise einer von mehreren Be- und Entladespuren manuell und/oder automatisch zugeordnet werden und eine Ist-Position eines sich auf der zugeordneten Be- und Entladespur befindenden Lastkraftwagens erfassen kann, eine Auswerteeinheit, die derart ausgelegt ist, dass sie eine von dem Positionserfassungssensor erfasste Ist-Position mit der vorbestimmten Halteposition vergleicht und in Abhängigkeit von dem Vergleichsergebnis ein Korrektursignal erzeugt, und eine Fahrer-Ausgabeeinheit, die derart ausgelegt ist, dass sie in Abhängigkeit von dem Korrektursignal eine Fahreranweisung für den Fahrer des Lastkraftwagens ausgibt, die es diesem ermöglicht, den Lastkraftwagen in die vorbestimmte Halteposition zu bewegen.

Derartige Leitsysteme, die auch als Chassisausrichtungssysteme (chassis alignment systems) bezeichnet werden, sind im Stand der Technik bekannt, beispielsweise aus der EP-A-1 337 454. Sie dienen dazu, Lastkraftwagen mit oder ohne mitgeführten Container zum Be-und/oder Entladen an eine vorbestimmten Halteposition zu leiten, damit die Container ohne Verzögerung vom Kran aufgenommen oder abgesetzt werden können.

Ein Anwendungsgebiet solcher Leitsysteme sind beispielsweise Containerterminals der See- und Binnenhäfen, bei denen mehrere als Containerbrücken ausgebildete Kräne entlang eines Kais angeordnet sind. Unterhalb der Containerbrücken erstrecken sich parallel zueinander mehrere Be- und Entladespuren, auf denen Lastkraftwagen zu den einzelnen Kränen gelangen können. Während des Betriebs wird jeder dieser Spuren ein Kran zugeordnet, der für die Be- und Entladung der auf dieser Spur vorhandenen Lastkraftwagen verantwortlich ist, wobei die Spurzuordnung jederzeit wechseln kann. Um die Abfertigung der Lastkraftwagen zu beschleunigen, ist jeder Kran mit einem Leitsystem der eingangs genannten Art ausgestattet, das von dem Kran zu be-oder entladende Lastkraftwagen automatisch zu einer vorbestimmten Halteposition auf der entsprechenden Spur lotst. Hierzu verfügt das System über wenigstens einen Positionserfassungssensor, der normalerweise oberhalb der Spuren angeordnet und derart ausgebildet ist, dass er wahlweise einer der Mehrzahl von Spuren manuell zugeordnet werden und eine Ist-Position eines sich auf der zugeordneten Spur befindenden Lastkraftwagens erfassen kann. Bei dem Positionserfassungssensor kann es sich beispielsweise um einen 2D-Laserscanner handeln, der schwenkbar gehalten und entsprechend auf eine von mehreren Spuren ausgerichtet werden kann. Erfasst ein solcher Positionserfassungssensor die Einfahrt eines Lastkraftwagens auf der ihm zugeordneten Spur, so bestimmt er automatisch dessen Ist-Position. Diese Ist-Position wird dann an eine Auswerteeinheit des Systems übermittelt, welche die Ist-Position mit einer vorbestimmten Halteposition vergleicht, in der der Lastkraftwagen für den Be- oder Entladevorgang positioniert werden soll. Stimmt die Ist-Position mit der vorbestimmten Halteposition nicht überein, so erzeugt die Auswerteeinheit ein Korrektursignal. In Abhängigkeit von diesem Korrektursignal gibt eine Fahrer-Ausgabeeinheit des Systems, bei der es sich meist um eine Ampelanlage handelt, eine Fahreranweisung für den Fahrer des Lastkraftwagens aus, die es diesem ermöglicht, den Lastkraftwagen in die vorbestimmte Halteposition zu rangieren. Stimmt die anschließend von dem Positionserfassungssensor erneut erfasste Ist-Position immer noch nicht mit der vorbestimmten Halteposition überein, so wird der zuvor beschriebene Vorgang so oft wiederholt, bis sich der Lastkraftwagen in der vorbestimmten Halteposition befindet, woraufhin der Kran die Be- oder Entladearbeiten durchführt. Nach Abfertigung eines Lastkraftwagens wird dann der nächste Lastkraftwagen in die vorbestimmte Halteposition gelotst.

Bei den bislang bekannten Leitsystemen erfolgt die Zuordnung des wenigstens einen Positionserfassungssensors zu einer der Spuren manuell über den Kranführer unter Verwendung einer im Kranführerhaus vorgesehenen Steuerung. Diese Spurzuordnung des Sensors wird in der Praxis von den Kranführern aber häufig vergessen, so dass der Positionserfassungssensor auf der aktuellen Spur, die vom Kran bedient werden soll, nicht aktiv ist, weshalb die Lastkraftwagen nicht an die vorbestimmte Halteposition geleitet werden können. Erst wenn der Kranführer die Zuordnung des Positionserfassungssensors zur aktuellen Be- und Entladespur ordnungsgemäß einstellt, kann das Leitsystem in der zuvor beschriebenen Weise zeitsparend in den Kranbetrieb eingreifen. In Abhängigkeit von der Erfahrung des Kranführers erfolgt diese Änderung der Zuordnung meist innerhalb weniger Be- und/oder Entladezyklen. Es passiert allerdings auch, dass das System, wenn der Positionserfassungssensor einer falschen Spur zugeordnet ist, einen Fehler deklariert und dann automatisch oder durch den Kranführer aus dem Betrieb genommen wird. Erhebliche Zeiteinbußen bei der Be- und Entladung der Lastkraftwagen sind die Folge.

Ausgehend von diesem Stand der Technik ist es eine Aufgabe der vorliegenden Erfindung, ein System der eingangs genannten Art zu schaffen, das einen zeitoptimierten Be- und Entladebetrieb sicherstellt.

Zur Lösung dieser Aufgabe schafft die vorliegende Erfindung ein System der eingangs genannten Art, das dadurch gekennzeichnet ist, dass das System wenigstens eine Spurerkennungseinheit aufweist, die derart ausgelegt ist, dass sie diejenige Be- und Entladespur, auf welcher der Kran Lastkraftwagen be- und/oder entladen soll oder aktuell be-und/oder entlädt, automatisch erfasst und ein die erfasste Spur repräsentierendes Spursignal ausgibt. Mit anderen Worten stellt die Spurerkennungseinheit fest, auf welcher der Spuren der nächste Be- und/oder Entladezyklus stattfinden soll, um den Positionserfassungssensor entsprechend der richtigen Spur zuordnen zu können. Diese Spurerfassung kann beispielsweise kurz vor Aufnahme des Kranbetriebs erfolgen. Normalerweise stehen die Lastkraftwagen bereits auf einer Be- und Entladespur unterhalb des entsprechenden Krans in Warteposition, bevor der Kran in Betrieb geht. Entsprechend kann die Spurerkennungseinheit feststellen, auf welcher Be-und Entladespur ein Lastkraftwagen in Wartestellung steht, um daraufhin den Positionserfassungssensor dieser Be- und Entladespur zuzuordnen. Alternativ oder zusätzlich stellt die Spurerkennungseinheit erfindungsgemäß fest, auf welcher der Spuren der Kran im aktuellen Be- oder Entladezyklus einen Lastkraftwagen be- bzw. entlädt. Stimmt diese Spur nicht mit derjenigen Spur überein, auf der der vorherige Zyklus stattgefunden hat, so kann umgehend auf den vom Kranführer durchgeführten Spurwechsel reagiert werden, indem der Positionserfassungssensor der neuen Spur zugeordnet wird.

Gemäß einer Ausgestaltung der vorliegenden Erfindung weist das System eine Kranführer-Ausgabeeinheit auf, die derart ausgelegt ist, dass sie in Abhängigkeit von dem von der Spurerkennungseinheit ausgegebenen Spursignal eine Kranführeranweisung für den Kranführer ausgibt, den Positionserfassungssensor der von der Spurerkennungseinheit erfassten Be- und Entladespur manuell zuzuordnen. Auf diese Weise wird der Kranführer im Falle eines Spurwechsels daran erinnert, die neue Spurzuordnung des Positionserfassungssensors manuell einzustellen. Bei der Kranführeranweisung kann es sich um ein optisches oder akustisches Signal handeln, das über die Kranführer-Ausgabeeinheit ausgegeben wird, wobei als Kranführer-Ausgabeeinheit beispielsweise eine Leuchte, ein Monitor, ein Lautsprecher oder dergleichen verwendet werden kann.

Gemäß einer weiteren Ausgestaltung der vorliegenden Erfindung ist das System derart ausgelegt, dass der Positionserfassungssensor der von der Spurerkennungseinheit erfassten Be- und Entladespur in Abhängigkeit von dem von der Spurerkennungseinheit ausgegebenen Spursignal automatisch zugeordnet wird. Entsprechend ist ein manuelles Eingreifen des Kranführers zur Einstellung der neuen Spurzuordnung des Positionserfassungssensors nicht erforderlich.

Bevorzugt ist die Spurerkennungseinheit derart ausgelegt, dass sie diejenige Be- und Entladespur, auf welcher der Kran Lastkraftwagen aktuell be- und/oder entlädt, basierend auf sensorisch erfassten Krandaten erfasst, insbesondere basierend auf Positionsdaten betreffend die Laufkatze und/oder auf Positionsdaten betreffend die Höhe des Krangreifers und/oder auf Daten betreffend den Zustand des Krangreifers, insbesondere ob der Greifer gerade greift oder nicht. Diese Daten geben Aufschluss darüber, auf welcher Be-und Entladespur der Kran derzeit tätig ist. Alternativ oder zusätzlich kann natürlich auch auf andere Informationsquellen zurückgegriffen werden, insbesondere auf Kranzuständigkeitsdaten, aus denen hervorgeht, für welche Be-und Entladespuren weitere Kräne eines Containerterminals zuständig sind. Da jeder Spur jeweils nur ein einzelner Kran zugeordnet ist, kann die Spurzuständigkeit eines Krans entsprechend über das Ausschlussverfahren ermittelt werden. Alternativ oder zusätzlich können auch statistische Langzeitinformationen in Bezug auf die Spurbelegung der jeweiligen Kräne genutzt werden, um diejenige Be- und Entladespur zu identifizieren, die der Kran bedienen soll. Wird der Kran beispielsweise überwiegend auf der dritten Spur eingesetzt, kann der Positionserfassungssensor gemäß einer Grundeinstellung des Systems bei Aufnahme des Kranbetriebs automatisch der dritten Spur zugeordnet werden.

Gemäß einer Ausgestaltung der vorliegenden Erfindung ist die Spurerkennungseinheit derart ausgelegt, dass sie diejenige Be- und Entladespur, auf welcher der Kran Lastkraftwagen be-und/oder entladen soll oder aktuell be- und/oder entlädt, basierend auf einem 3D-Scan sämtlicher Be- und Entladespuren erfasst, wobei anhand des Scans die Positionen sämtlicher auf den Be- und Entladespuren vorhandenen Lastkraftwagen innerhalb eines vorbestimmten Bereiches ermittelt werden. Mit anderen Worten kann die Spurerkennungseinheit bei Aufnahme des Kranbetriebs oder im Falle einer Fehlermeldung während des Betriebs wenigstens einen 3D-Scan sämtlicher Be- und Entladespuren durchführen, um diejenige Spur ausfindig zu machen, für die der Kran derzeit zuständig ist, um daraufhin den Positionserfassungssensor der entsprechenden Spur zuzuordnen. Auf diese Weise kann jederzeit eine Systemneukonfiguration durchgeführt werden.

Bevorzugt ist der wenigstens eine Positionserfassungssensor zur Durchführung eines 3D-Scans sämtlicher Be- und Entladespuren innerhalb eines vorbestimmten Bereiches ausgelegt. Alternativ oder zusätzlich kann auch wenigstens ein zusätzlicher, zur Durchführung eines 3D-Scans sämtlicher Be- und Entladespuren innerhalb eines vorbestimmten Bereiches ausgelegter 3D-Scanner vorgesehen sein.

Bei dem Positionserfassungssensor handelt es gemäß einer Ausgestaltung der vorliegenden Erfindung um einen 2D-Laserscanner. Ein solcher 2D-Laserscanner hat sich in der Vergangenheit bewährt und ist mit geringen Kosten verbunden. Der 2D-Laserscanner ist dabei vorteilhaft quer zu den Be- und Entladespuren bewegbar und/oder schwenkbar angeordnet, um einerseits eine Ausrichtung des 2D-Laserscanners auf die einzelnen Spuren und andererseits die Durchführung eines 3D-Scans zu ermöglichen.

Zur Lösung der eingangs genannten Aufgabe schafft die vorliegende Erfindung ferner ein Verfahren zum automatischen Leiten eines von einem Kran zu be- und/oder entladenden Lastkraftwagens in eine vorbestimmte Halteposition relativ zu dem Kran unter Verwendung eines Systems nach einem der vorhergehenden Ansprüche, das die Schritte aufweist:
a) manuelles und/oder automatisches Zuordnen des wenigstens einen Positionserfassungssensors zu einer von mehreren Be- und Entladespuren;
b) Erfassen einer Ist-Position eines auf der dem Positionserfassungssensor zugeordneten Be- und Entladespur vorhandenen Lastkraftwagens unter Verwendung des Positionserfassungssensors;
c) Vergleichen der Ist-Position mit der vorbestimmten Halteposition und Erzeugen eines Korrektursignals in Abhängigkeit von dem Vergleichsergebnis unter Verwendung der Auswerteeinheit;
d) Ausgeben einer Fahreranweisung für den Fahrer des Lastkraftwagens in Abhängigkeit von dem Korrektursignal unter Verwendung der Fahrer-Ausgabeeinheit, die es dem Fahrer ermöglicht, den Lastkraftwagen in die vorbestimmte Halteposition zu bewegen;
e) Wiederholen der Schritte b) bis d), bis die Ist-Position mit der Halteposition übereinstimmt;
wobei diejenige Be- und Entladespur, auf welcher der Kran Lastkraftwagen gerade be- und/oder entlädt, unter Verwendung der Spurerkennungseinheit automatisch erfasst wird, wobei, wenn die erfasste Be- und Entladespur mit derjenigen Be- und Entladespur übereinstimmt, welcher der Positionserfassungssensor zugeordnet ist, die Zuordnung des Positionserfassungssensors beibehalten wird, oder, wenn die erfasste Be- und Entladespur mit derjenigen Be- und Entladespur nicht übereinstimmt, welcher der Positionserfassungssensor zugeordnet ist, die Spurzuordnung automatisch oder manuell zu der von der Spurerkennungseinheit erfassten Be- und Entladespur gewechselt wird, woraufhin die Schritte b) bis d) zum Leiten eines weiteren Lastkraftwagens in die vorbestimmte Halteposition wiederholt werden.

Gemäß einer Ausgestaltung der erfindungsgemäßen Verfahrens wird, wenn die erfasste Be- und Entladespur mit derjenigen Be- und Entladespur, welcher der Positionserfassungssensor zugeordnet ist, nicht übereinstimmt, in Abhängigkeit von dem von der Spurerkennungseinheit ausgegebenen Spursignal unter Verwendung der Kranführer-Ausgabeeinheit eine Kranführeranweisung an den Kranführer ausgegeben, den Positionserfassungssensor der von der Spurerkennungseinheit erfassten Be- und Entladespur manuell zuzuordnen.

Gemäß einer Variante wird, wenn die erfasste Be- und Entladespur mit derjenigen Be- und Entladespur, welche der Positionserfassungssensor zugeordnet ist, nicht übereinstimmt, der Positionserfassungssensor der von der Spurerkennungseinheit erfassten Be- und Entladespur in Abhängigkeit von dem von der Spurerkennungseinheit ausgegebenen Spursignal automatisch zugeordnet.

Bevorzugt erfasst die Spurerkennungseinheit diejenige Be- und Entladespur, auf welcher der Kran Lastkraftwagen aktuell be-und/oder entlädt, basierend auf sensorisch erfassten Krandaten, insbesondere basierend auf Positionsdaten betreffend die Laufkatze und/oder auf Positionsdaten betreffend die Höhe des Krangreifers und/oder auf Daten betreffend den Zustand des Krangreifers.

Gemäß einer Ausgestaltung des erfindungsgemäßen Verfahrens erfasst die Spurerkennungseinheit diejenige Be- und Entladespur, auf welcher der Kran Lastkraftwagen be- und/oder entladen soll, basierend auf einem 3D-Scan sämtlicher Be- und Entladespuren, wobei anhand des Scans die Positionen sämtlicher auf den Be- und Entladespuren im Bereich des Krans vorhandenen Lastkraftwagen ermittelt werden, woraufhin der Positionserfassungssensor automatisch der von der Spurerkennungseinheit erfassten Be- und Entladespur zugeordnet wird. Bei dieser Variante ist ein Eingreifen des Kranführers, wie es bereits zuvor beschrieben wurde, nicht erforderlich.

Weitere Merkmale und Vorteile der vorliegenden Erfindung werden anhand der nachfolgenden Beschreibung eines Ausführungsbeispiels der vorliegenden Erfindung unter Bezugnahme auf die beiliegende Zeichnung deutlich. Darin ist
- Figur 1: eine schematische Draufsicht eines Containerterminals mit sechs Kränen, die entlang eines Kais aufgereiht sind;
- Figur 2: eine schematische Seitenansicht eines der in Figur 1 dargestellten Kräne, der mit einem System gemäß einer Ausführungsform der vorliegenden Erfindung ausgestattet ist, wobei die Laufkatze des Krans zu Erläuterungszwecken in drei verschiedenen Stellungen dargestellt ist;
- Figur 3: eine schematische Vorderansicht des in Figur 2 dargestellten Krans; und
- Figur 4: eine schematische Rückansicht des in Figur 2 dargestellten Krans.

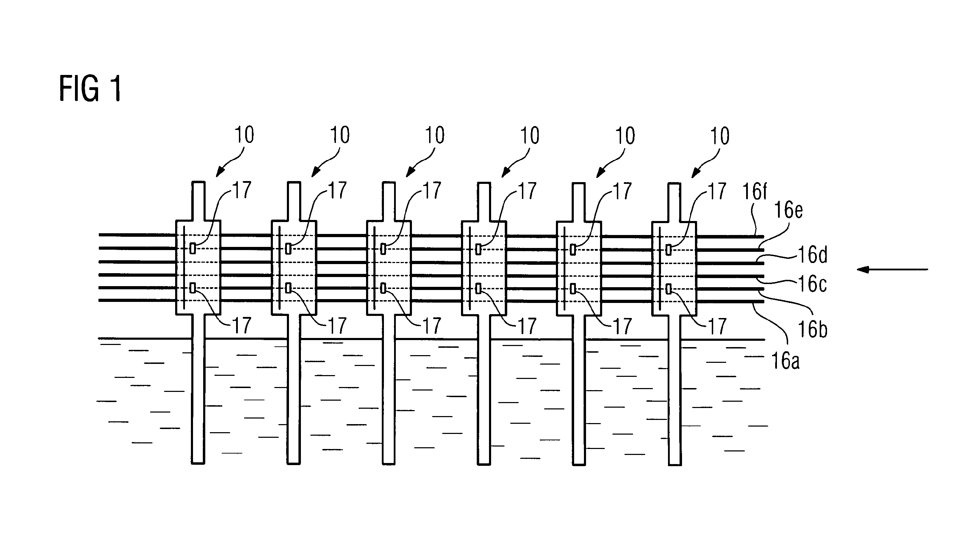

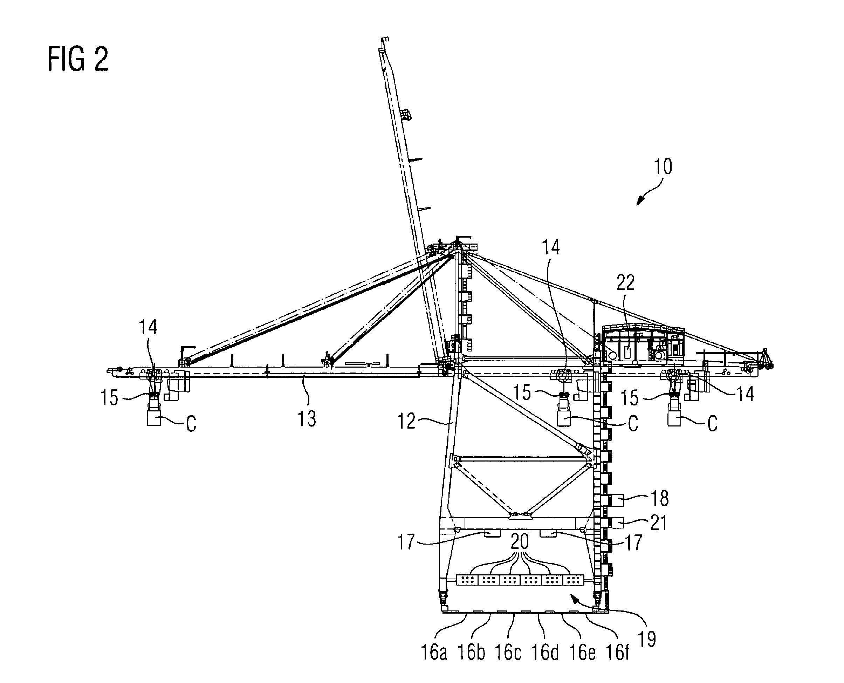

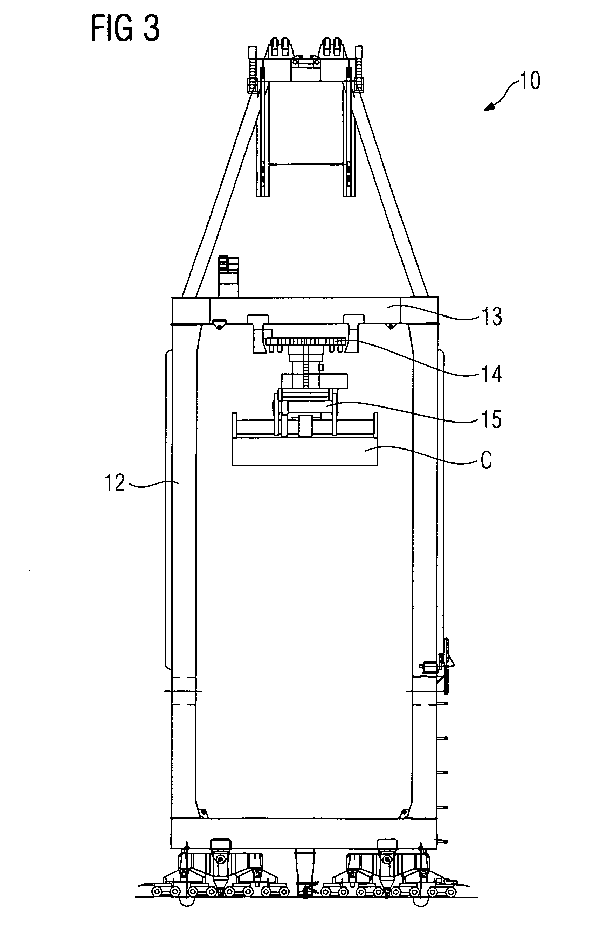

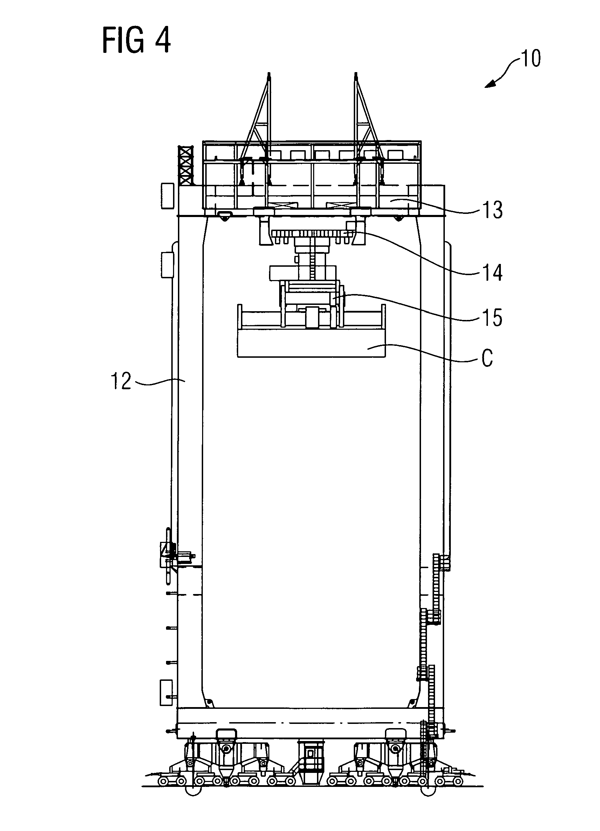

Figur 1 zeigt eine schematische Draufsicht eines Containerterminals eines See- oder Binnenhafens. Der Containerterminal umfasst insgesamt sechs Kräne 10, die entlang einer Kaimauer 11 aufgereiht sind und zum Be- und Entladen von Frachtschiffen eingesetzt werden. Bei den Kränen 10 handelt es sich jeweils um baugleiche Portalkräne mit, wie es in den Figuren 2 bis 4 dargestellt ist, einem Portal 12 und einer Kranbrücke 13, entlang der eine Laufkatze 14 verfahrbar angeordnet ist. Die Laufkatze 14 umfasst ein nicht näher dargestelltes Hubwerk, mit dem in bekannter Weise ein Greifer 15 auf- und abwärts bewegt werden kann, der zur Aufnahme von Containern C dient. Unterhalb des Portals 12 sind mehrere Be- und Entladespuren 16 vorgesehen - vorliegend die sechs Spuren 16a, b, c, d, e und f - die sich quer zur Kranbrücke 13 und parallel zueinander erstrecken. Auf diesen Spuren können abzufertigende Lastkraftwagen zu vorbestimmten Haltepositionen unterhalb der sechs Kräne 10 gelangen, was nachfolgend noch näher erläutert wird.

Um die Abfertigung der Lastkraftwagen zu beschleunigen, ist jeder Kran 10 mit einem Leitsystem versehen, das dazu dient, einen von einem Kran 10 zu be- und/oder entladenden Lastkraftwagen in eine vorbestimmte Halteposition relativ zu dem Kran 10 zu leiten. Hierzu verfügt jedes Leitsystem über zwei Positionserfassungssensoren 17, die oberhalb der Spuren 16a-f am jeweiligen Kran 10 angeordnet sind. Die Positionserfassungssensoren 17 sind jeweils derart ausgebildet, dass sie einer der Mehrzahl von Spuren 16a-f manuell zugeordnet werden und eine Ist-Position eines sich auf der zugeordneten Spur 16a-f befindenden Lastkraftwagens erfassen können. Bei den Positionserfassungssensoren 17 handelt es sich vorliegend um 2D-Laserscanner, die derart beweglich an den Kränen 10 gehalten sind, dass sie wahlweise auf eine einzelne der Spuren 16a-f ausgerichtet werden können. Genauer gesagt kann der in Figur 2 links dargestellte Positionserfassungssensor 17 wahlweise auf die Spuren 16a-c ausgerichtet werden, während der in Figur 2 rechts dargestellte Positionserfassungssensor 17 wahlweise auf eine der Spuren 16d-f ausgerichtet werden kann. Darüber hinaus ist jeder Positionserfassungssensor 17 zur Durchführung eines 3D-Scans mehrerer Be- und Entladespuren 16a-c bzw. 16d-f ausgelegt. Grundsätzlich ist die Anzahl der Positionserfassungssensoren 17 variabel. So kann das Leitsystem alternativ auch mit einem einzelnen oder mit mehr als zwei Positionserfassungssensoren 17 ausgestattet sein. Die Anzahl der Positionserfassungssensoren 17 richtet sich einerseits nach der geforderten Positionserfassungsgenauigkeit und andererseits nach der Anzahl der vorhandenen Spuren 16a-f.

Ferner umfasst jedes Leitsystem eine Auswerteeinheit 18, die derart ausgelegt ist, dass sie eine von den Positionserfassungssensoren 17 erfasste Ist-Position mit einer vorbestimmten Halteposition vergleicht, an der ein Lastkraftwagen von dem Kran 10 be- und/oder entladen werden soll, und in Abhängigkeit von dem Vergleichsergebnis ein Korrektursignal erzeugt.

Ein weiterer Bestandteil jedes Leitsystems ist eine Fahrer-Ausgabeeinheit 19, bei der es sich vorliegend um eine Ampelanlage handelt. Die Ampelanlage umfasst mehrere Anzeigen 20, die jeweils einer der Spuren 16a-f zugeordnet sind. Über die Anzeigen 20 werden den Fahrern der auf den Spuren 16a-f vorhandenen Lastkraftwagen Lichtsignale übermittelt, die den Fahrern anzeigen, wie sie ihren Lastkraftwagen aus einer aktuellen Ist-Position in die vorbestimmte Halteposition rangieren müssen.

Ferner weist jedes Leitsystem eine Spurerkennungseinheit 21 auf, die derart ausgelegt ist, dass sie diejenige Be- und Entladespur 16a-f, auf welcher der Kran 10 einen Lastkraftwagen be- und/oder entladen soll oder aktuell be-und/oder entlädt, automatisch erfasst und ein die erfasste Spur 16a-f repräsentierendes Spursignal ausgibt. Hierzu ist die Spurerkennungseinheit 21 zum einen derart ausgelegt, dass sie diejenige Spur 16a-f, auf welcher der Kran 10 Lastkraftwagen be- und/oder entladen soll, basierend auf wenigstens einem unter Verwendung der Positionserfassungssensoren 17 durchgeführten 3D-Scan sämtlicher Be- und Entladespuren 16a-f innerhalb eines vorbestimmten Bereiches erfasst, wobei anhand des Scans die Positionen sämtlicher auf den Be- und Entladespuren 16a-f im Bereich des Krans 10 vorhandenen Lastkraftwagen ermittelt werden. Zum anderen ist die Spurerkennungseinheit 21 derart ausgelegt, dass sie diejenige Be- und Entladespur 16a-f, auf welcher der Kran 10 Lastkraftwagen aktuell be- und/oder entlädt, basierend auf sensorisch erfassten Krandaten erfasst, und zwar basierend auf Positionsdaten betreffend die Laufkatze 14, auf Positionsdaten betreffend die Höhe des Greifers 15 und auf Daten betreffend den Zustand des Greifers 15, also ob dieser zum Greifen oder Loslassen eines Containers C betätigt wird oder nicht.

Noch ein weiterer Bestandteil jedes Leitsystems ist eine Kranführer-Ausgabeeinheit 22, die im Führerhaus des Krans 10 angeordnet ist. Die Kranführer-Ausgabeeinheit 22 ist derart ausgelegt, dass sie dem Kranführer in Abhängigkeit von dem von der Spurerkennungseinheit 21 ausgegebenen Spursignal eine Kranführeranweisung ausgibt, den entsprechenden Positionserfassungssensor 17 der von der Spurerkennungseinheit 21 erfassten Be- und Entladespur 16a-f manuell zuzuordnen. Bei der Kranführer-Ausgabeeinheit 22 handelt es sich vorliegend um ein Display, wobei aber auch andere Ausgabeeinheiten verwendet werden können, wie beispielsweise eine Leuchtanzeige und/oder ein Lautsprecher.

Der in Figur 1 dargestellte Containerterminal ist derart ausgelegt, das jeder der Kräne 10 für das Be- und Entladen von Lastkraftwagen auf einer der Spuren 16a-f zuständig ist. Nachfolgend wird unter Bezugnahme auf Figur 5 der Betrieb des Containerterminals bzw. eines einzelnen Krans 10 unter Einsatz des erfindungsgemäßen Leitsystems näher erläutert.

Bei der Inbetriebnahme eines Krans 10 des Containerterminals ist es dem zugehörigen Leitsystemen nicht bekannt, auf welcher der Spuren 16a-f es die den Containerterminal in Richtung des Pfeils A durchfahrenden Lastkraftwagen in die vorbestimmte Haltepositionen unterhalb des Krans 10 leiten soll. Zur Inbetriebnahme des Krans 10 steuert die Spurerkennungseinheit 21 daher die Positionserfassungssensoren 17 in einem ersten Schritt derart an, dass diese einen 3D-Scan sämtlicher Spuren 16a-f durchführen. Anhand dieses 3D-Scans ermittelt die Spurerkennungseinheit 21 die Positionen sämtlicher im Scanbereich vorhandenen Lastkraftwagen, die sich zum Zeitpunkt der Inbetriebnahme des Krans 10 bereits in Warteposition befinden. Aufgrund der Tatsache, dass jeder Spur 16a-f jeweils nur ein einzelner Kran 10 zugeordnet werden soll, wird wahrscheinlich nur auf derjenigen Spur 16a-f ein Lastkraftwagen in Warteposition stehen, die von dem Kran 10 abgefertigt werden soll. Wird bei diesem Scan ein einzelner Lastkraftwagen in Warteposition erfasst, so wird einer der Positionserfassungssensoren 17 in einem weiteren Schritt automatisch derjenigen Spur 16a-f zugeordnet, auf der sich der Lastkraftwagen befindet. Werden im Rahmen des 3D-Scans hingegen auf mehreren Spuren 16a-f wartende oder gar keine Fahrzeuge erfasst, so fragt die Spurerkennungseinheit 21 die Spurzuordnungen der anderen Kräne 10 ab. Sind alle anderen Kräne 10 bereits einer Spur 16a-f zugeordnet, so ermittelt die Spurerkennungseinheit 21 über das Ausschlussverfahren die richtige Spur 16a-f, woraufhin die Sensorzuordnung erfolgen kann. Andernfalls wird der Kranführer über die Kranführer-Ausgabeeinheit 22 dazu aufgefordert, die richtige Spur 16a-f über eine entsprechende Eingabeeinrichtung einzugeben, so dass die Sensorzuordnung basierend auf der Eingabe des Kranführers durchgeführt werden kann.

Sollte die im Rahmen des 3D-Scans erfasste Ist-Position des auf der nunmehr aktiv geschalteten Spur 16a-f vorhandenen Lastkraftwagens nicht genau genug sein, um den Lastkraftwagen ausgehend von dieser Ist-Position in die vorbestimmte Halteposition zu leiten, wird die Ist-Position erneut von dem Positionserfassungssensor 17 erfasst. Diese Ist-Position wird dann an die Auswerteeinheit 18 des Leitsystems übermittelt, welche die Ist-Position mit der vorbestimmten Halteposition vergleicht. Stimmt die Ist-Position mit der vorbestimmten Halteposition nicht überein, so erzeugt die Auswerteeinheit 18 ein Korrektursignal, das an die Fahrer-Ausgabeeinheit 19 übermittelt wird. In Abhängigkeit von diesem Korrektursignal gibt die Fahrer-Ausgabeeinheit 19 eine Fahreranweisung für den Fahrer des Lastkraftwagens in Form eines Lichtsignals aus, das es dem Fahrer ermöglicht, sein Fahrzeug in die vorbestimmte Halteposition zu rangieren. Stimmt die anschließend von dem Positionserfassungssensor 17 erneut erfasste Ist-Position mit der vorbestimmten Halteposition überein, so ist kein weiteres Rangieren erforderlich, was dem Fahrer über die Fahrerausgabeeinheit 19 über ein entsprechendes Signal angezeigt wird. Ist dies hingegen nicht der Fall, so wird der zuvor beschriebene Vorgang so oft wiederholt, bis sich der Lastkraftwagen in der vorbestimmten Halteposition befindet, woraufhin der Kran 10 die Be-und/oder Entladearbeiten durchführt. Nach Abfertigen eines Lastkraftwagens wird dann der nächste Lastkraftwagen in die vorbestimmte Halteposition gelotst, sobald der Positionserfassungssensor 17 dessen Ist-Position erfasst hat.

Während des Betriebs des Krans 10 erfasst die Spurerkennungseinheit 21 diejenige Be- und Entladespur, auf welcher der Kran 10 aktuell Lastkraftwagen abfertigt. Diese Spurerfassung erfolgt basierend auf den sensorisch erfassten Krandaten, also auf den Positionsdaten betreffend die Laufkatze 14, auf den Positionsdaten betreffend die Höhe des Greifers 15 und basierend auf Daten betreffend den Zustand des Greifers 15. Stellt die Spurerkennungseinheit 30 fest, dass die aktuell von dem Kran 10 bediente Spur 16a-f nicht mit derjenigen Spur 16a-f übereinstimmt, der einer der Positionserfassungssensoren 17 aktuell zugeordnet ist, so ist dies ein Anzeichen dafür, dass sich die Spurbelegung des Krans 10 während des Betriebs geändert hat. Ist dies der Fall, so gibt die Spurerkennungseinheit 21 ein die erfasste Spur 16a-f repräsentierendes Spursignal aus und übermittelt es an die Kranführer-Ausgabeeinheit 22. In Abhängigkeit von diesem Spursignal gibt die Kranführer-Ausgabeeinheit 22 eine Kranführeranweisung an den Kranführer aus, dass dieser einen der Positionserfassungssensoren 17 der von der Spurerkennungseinheit 21 erfassten Be- und Entladespur 16a-f manuell zuordnen soll. Auf diese Weise wird der Kranführer darauf aufmerksam gemacht, dass er es versäumt hat, den entsprechenden Positionserfassungssensor 17 auf die neue Spur 16a-f einzustellen, die er bereits bedient.

Alternativ ist es natürlich auch möglich, dass die Zuordnung eines Positionserfassungssensors 17 zu der von der Spurerkennungseinheit 21 neu erfasste Spur 16a-f in Abhängigkeit von dem von der Spurerkennungseinheit 21 ausgegebenen Spursignal automatisch erfolgt. In diesem Fall kann auf die Kranführer-Ausgabeeinheit 22 ggf. verzichtet werden.

Ein wesentlicher Vorteil des erfindungsgemäßen Leitsystems besteht darin, dass durch das Vorsehen der Spurerfassungseinheit 21 eine automatische Spurerkennung erfolgt, auf der basierend der oder einer der Positionserfassungssensoren 17 der von der Spurerfassungseinheit 21 erfassten Spur zugeordnet werden kann, wobei diese Zuordnung automatisch oder manuell durch den Kranführer nach entsprechender automatischer Aufforderung vorgenommen wird. Die Spurerkennung kann im Fall der Inbetriebnahme des Krans 10 oder eines Systemneustarts unter Durchführung wenigstens eines 3D-Scans sämtlicher Spuren erfolgen. Während des Kranbetriebs basiert die Spurerkennung auf den Kran oder den Kranbetrieb betreffenden Informationen. Als Beispiel wurden hier die Position der Laufkatze, die Höhe und der Zustand des Greifers, die Spurbelegung der anderen Kräne und Erfahrungswerte genannt, also beispielsweise statistische Langzeitinformationen darüber, welche Spur von einem bestimmten Kran in der Vergangenheit am häufigsten bedient wurde. Dank der automatischen Spurerkennung kann sehr schnell und halb- oder vollautomatisch auf eine Änderung der Zuständigkeit eines Krans für eine Spur reagiert werden, wodurch sichergestellt ist, dass das Leitsystems die zu be-oder entladenden Lastkraftwagen ordnungsgemäß an die vorbestimmte Halteposition in der richtigen Spur lotst.

Es sollte klar sein, dass das unter Bezugnahme auf die Zeichnung beschriebene Ausführungsbeispiel verändert und/oder ergänzt werden kann, ohne den durch die Ansprüche definierten Schutzbereich zu verlassen. Insbesondere können in der Beschreibungseinleitung aufgeführte erfindungsgemäße Merkmale diejenigen Merkmale ergänzen und/oder ersetzen, die im Rahmen des Ausführungsbeispiels beschrieben sind.

## Patentansprüche

1. Leitsystem zum automatischen Leiten eines von einem Kran (10) zu be- und/oder entladenden Lastkraftwagens in eine vorbestimmte Halteposition relativ zu dem Kran (10), umfassend
- wenigstens einen Positionserfassungssensor (17), der derart ausgelegt ist, dass er wahlweise einer von mehreren Be- und Entladespuren (16a-f) manuell und/oder automatisch zugeordnet werden und eine Ist-Position eines sich auf der zugeordneten Be- und Entladespur (16a-f) befindenden Lastkraftwagens erfassen kann,
- eine Auswerteeinheit (18), die derart ausgelegt ist, dass sie eine von dem Positionserfassungssensor (17) erfasste Ist-Position mit der vorbestimmten Halteposition vergleicht und in Abhängigkeit von dem Vergleichsergebnis ein Korrektursignal erzeugt, und
- eine Fahrer-Ausgabeeinheit (19), die derart ausgelegt ist, dass sie in Abhängigkeit von dem Korrektursignal eine Fahreranweisung für den Fahrer des Lastkraftwagens ausgibt, die es diesem ermöglicht, den Lastkraftwagen in die vorbestimmte Halteposition zu bewegen,
**dadurch gekennzeichnet, dass** das Leitsystem wenigstens eine Spurerkennungseinheit (21) aufweist, die derart ausgelegt ist, dass sie diejenige Be- und Entladespur (16a-f), auf welcher der Kran (10) Lastkraftwagen be- und/oder entladen soll oder aktuell be- und/oder entlädt, automatisch erfasst und ein die erfasste Spur (16a-f) repräsentierendes Spursignal ausgibt.

2. System nach Anspruch 1,
**dadurch gekennzeichnet, dass**
dieses eine Kranführer-Ausgabeeinheit (22) aufweist, die derart ausgelegt ist, dass sie dem Kranführer in Abhängigkeit von dem von der Spurerkennungseinheit (21) ausgegebenen Spursignal eine Kranführeranweisung ausgibt, den Positionserfassungssensor (17) der von der Spurerkennungseinheit (21) erfassten Be- und Entladespur (16a-f) manuell zuzuordnen.

3. System nach Anspruch 1 oder 2,
**dadurch gekennzeichnet, dass**
dieses derart ausgelegt ist, dass der Positionserfassungssensor (17) der von der Spurerkennungseinheit (21) erfassten Be- und Entladespur (16a-f) in Abhängigkeit von dem von der Spurerkennungseinheit (21) ausgegebenen Spursignal automatisch zugeordnet wird.

4. System nach einem der vorhergehenden Ansprüche,
**dadurch gekennzeichnet, dass**
die Spurerkennungseinheit (21) derart ausgelegt ist, dass sie diejenige Be- und Entladespur (16a-f), auf welcher der Kran (10) Lastkraftwagen aktuell be- und/oder entlädt, basierend auf sensorisch erfassten Krandaten erfasst, insbesondere basierend auf Positionsdaten betreffend einer Kranlaufkatze (14) und/oder auf Positionsdaten betreffend die Höhe eines Krangreifers (15) und/oder auf Daten betreffend den Zustand des Krangreifers (15) und/oder basierend auf Kranzuständigkeitsdaten und/oder basierend auf statistischen Langzeitinformationen.

5. System nach einem der vorhergehenden Ansprüche,
**dadurch gekennzeichnet, dass**
die Spurerkennungseinheit (21) derart ausgelegt ist, dass sie diejenige Be- und Entladespur (16a-f), auf welcher der Kran (10) Lastkraftwagen be- und/oder entladen soll oder aktuell be- und/oder entlädt, basierend auf wenigstens einem 3D-Scan sämtlicher Be- und Entladespuren (16a-f) innerhalb eines vorbestimmten Bereiches erfasst, wobei anhand des Scans die Positionen sämtlicher auf den Be- und Entladespuren (16a-f) im Bereich des Krans (10) vorhandenen Lastkraftwagen ermittelt werden.

6. System nach Anspruch 5,
**dadurch gekennzeichnet, dass**
der wenigstens eine Positionserfassungssensor (17) zur Durchführung eines 3D-Scans sämtlicher Be- und Entladespuren (16a-f) ausgelegt ist oder wenigstens ein zusätzlicher zur Durchführung eines 3D-Scans sämtlicher Be- und Entladespuren (16a-f) ausgelegter 3D-Scanner vorgesehen ist.

7. System nach einem der vorhergehenden Ansprüche,
**dadurch gekennzeichnet, dass**
der Positionserfassungssensor (17) ein 2D-Laserscanner ist.

8. Verfahren zum automatischen Leiten eines von einem Kran (10) zu be- und/oder entladenden Lastkraftwagens in eine vorbestimmte Halteposition relativ zu dem Kran (10) unter Verwendung eines Leitsystems nach einem der vorhergehenden Ansprüche, das die Schritte aufweist:
f) manuelles und/oder automatisches Zuordnen des wenigstens einen Positionserfassungssensors (17) zu einer von mehreren Be- und Entladespuren (16a-f);
g) Erfassen einer Ist-Position eines auf der dem Positionserfassungssensor (17) zugeordneten Be- und Entladespur (16a-f) vorhandenen Lastkraftwagens unter Verwendung des Positionserfassungssensors (17);
h) Vergleichen der Ist-Position mit der vorbestimmten Halteposition und Erzeugen eines Korrektursignals in Abhängigkeit von dem Vergleichsergebnis unter Verwendung der Auswerteeinheit (18);
i) Ausgeben einer Fahreranweisung für den Fahrer des Lastkraftwagens in Abhängigkeit von dem Korrektursignal unter Verwendung der Fahrer-Ausgabeeinheit (19), die es dem Fahrer ermöglicht, den Lastkraftwagen in die vorbestimmte Halteposition zu bewegen;
j) Wiederholen der Schritte b) bis d), bis die Ist-Position mit der Halteposition übereinstimmt;
**dadurch gekennzeichnet, dass** diejenige Be- und Entladespur (16a-f), auf welcher der Kran (10) Lastkraftwagen gerade be-und/oder entlädt, unter Verwendung der Spurerkennungseinheit (21) automatisch erfasst wird, wobei, wenn die erfasste Be-und Entladespur (16a-f) mit derjenigen Be- und Entladespur (16a-f) übereinstimmt, welcher der Positionserfassungssensor (17) zugeordnet ist, die Zuordnung des Positionserfassungssensors (17) beibehalten wird, oder, wenn die erfasste Be- und Entladespur (16a-f) mit derjenigen Be-und Entladespur (16a-f) nicht übereinstimmt, welcher der Positionserfassungssensor (17) zugeordnet ist, die Spurzuordnung automatisch oder manuell zu der von der Spurerkennungseinheit (21) erfassten Be- und Entladespur (16a-f) gewechselt wird, woraufhin die Schritte b) bis d) zum Leiten eines weiteren Lastkraftwagens in die vorbestimmte Halteposition wiederholt werden.

9. Verfahren nach Anspruch 8,
**dadurch gekennzeichnet, dass**,
wenn die erfasste Be- und Entladespur (16a-f) mit derjenigen Be- und Entladespur (16a-f), welcher der Positionserfassungssensor (17) zugeordnet ist, nicht übereinstimmt, in Abhängigkeit von dem von der Spurerkennungseinheit (21) ausgegebenen Spursignal unter Verwendung der Kranführer-Ausgabeeinheit (22) eine Kranführeranweisung an den Kranführer ausgegeben wird, den Positionserfassungssensor (17) der von der Spurerkennungseinheit (21) erfassten Be- und Entladespur (16a-f) manuell zuzuordnen.

10. Verfahren nach Anspruch 8,
**dadurch gekennzeichnet, dass**,
wenn die erfasste Be- und Entladespur (16a-f) mit derjenigen Be- und Entladespur, welcher der Positionserfassungssensor (17) zugeordnet ist, nicht übereinstimmt, der Positionserfassungssensor (17) der von der Spurerkennungseinheit (21) erfassten Be- und Entladespur (16a-f) in Abhängigkeit von dem von der Spurerkennungseinheit ausgegebenen Spursignal (16a-f) automatisch zugeordnet wird.

11. Verfahren nach einem der Ansprüche 8 bis 10,
**dadurch gekennzeichnet, dass**
die Spurerkennungseinheit (21) diejenige Be- und Entladespur (16a-f), auf welcher der Kran (10) Lastkraftwagen aktuell be-und/oder entlädt, basierend auf sensorisch erfassten Krandaten erfasst, insbesondere basierend auf Positionsdaten betreffend einer Kranlaufkatze (14) und/oder auf Positionsdaten betreffend die Höhe eines Krangreifers (15) und/oder auf Daten betreffend den Zustand des Krangreifers (15).

12. Verfahren nach einem der Ansprüche 8 bis 11,
**dadurch gekennzeichnet, dass**
die Spurerkennungseinheit (21) diejenige Be- und Entladespur (16a-f), auf welcher der Kran (10) Lastkraftwagen be-und/oder entladen soll, basierend auf einem 3D-Scan sämtlicher Be- und Entladespuren (16a-f) erfasst, wobei anhand des Scans die Positionen sämtlicher auf den Be- und Entladespuren (16a-f) im Bereich des Krans (10) vorhandenen Lastkraftwagen ermittelt werden, woraufhin der Positionserfassungssensor (17) automatisch der von der Spurerkennungseinheit (21) erfassten Be- und Entladespur (16a-f) zugeordnet wird.
